# EUROPÄISCHE PATENTSCHRIFT

(11) **EP 1 392 494 B1**
(45) Veröffentlichungstag und Bekanntmachung des Hinweises auf die Patenterteilung: **29.09.2004**
(21) Anmeldenummer: 02745343.0
(22) Anmeldetag: 31.05.2002
(51) Int. Cl.: B29C 65/08, B06B 1/02

(54) **VERFAHREN ZUM BEARBEITEN WIE VERSCHWEISSEN ODER VERFORMEN EINES WERKSTÜCKS**
METHOD FOR MACHINING, SUCH AS SOLDERING OR DEFORMATION, A WORKPIECE
PROCEDE D'USINAGE TEL QUE LE SOUDAGE ET LE FACONNAGE D'UNE PIECE

(30) Priorität: 01.06.2001 DE 10126943
(43) Veröffentlichungstag der Anmeldung: 03.03.2004
(73) Patentinhaber: Stapla Ultraschalltechnik GmbH, 65451 Kelsterbach (DE)
(72) Erfinder: NUSS, Lothar, 63150 Heusenstamm (DE)
(74) Vertreter: Stoffregen, Hans-Herbert, Dr. Dipl.-Phys.
(86) Internationale Anmeldenummer: PCT/EP2002/006019
(87) Internationale Veröffentlichungsnummer: WO 2002/098636

(56) Entgegenhaltungen:
- WO-A-98/49009
- US-A- 5 939 166

## Beschreibung

Die Erfindung bezieht sich auf ein Verfahren zum Bearbeiten wie Verschweißen oder Verformen von einem Werkstück, insbesondere aus Kunststoffmaterial bestehend oder dieses enthaltend, wobei zum Bearbeiten des Werkstücks auf diese eine Sonotrode einer Ultraschallschweißvorrichtung mittelbar oder unmittelbar zur Übertragung von Ultraschallenergie abgestützt wird und wobei während des Bearbeitens die Sonotrode in ihrer Schwingungsamplitude verändert wird.

Ein entsprechendes Verfahren ist z. B. der EP 0 567 426 B1 zu entnehmen. Bei den bekannten Ultraschallschweißverfahren, bei dem eine Sonotrode als Halbwellenlängenresonator in Resonanz schwingt und in Zwangskontakt mit einem Werkstoff gebracht wird und Ultraschallenergie während eines vorbestimmten Zeitintervalls auf das Werkstück überträgt, wird die Schwingungsamplitude der Sonotrode auf ein Steuersignal hin reduziert, um sodann während des verbleibenden Rests des vorbestimmten Zeitintervalls bei verringerter Schwingungsamplitude betrieben zu werden.

Das Steuersignal kann dabei in Abhängigkeit von der auf das Werkstück übertragenen Leistung ausgelöst werden. Entsprechende Verfahren sind auch der WO 98/49009, der US 5,855,706 oder der US 5,658,408 oder der US 5,435,863 zu entnehmen.

Als Regelgröße kann neben der übertragenen Ultraschallenergie Frequenz des Ultraschalls, Verformungsgrad des Werkstückes oder Erweichungszustand des Werkstückes gewählt werden. Durch die Regelung bedingt ist der regelungstechnische Aufwand der Vorrichtungen zur Realisierung entsprechender Verfahren recht aufwendig und damit störanfällig.

Der vorliegenden Erfindung liegt das Problem zu Grunde, ein Verfahren der eingangs genannten Art so weiterzubilden, dass durch einfaches Steuern eine Optimierung der Bearbeitung von Werkstücken, insbesondere des Verschweißens von Kunststoffteilen möglich wird, wobei gegebenenfalls auch eine selbstlermende Optimierung des Verfahrens möglich sein soll.

Erfindungsgemäß wird das Problem im Wesentlichen dadurch gelöst, dass während einer vorgegebenen Zeit tₓ die Schwingungsamplitude einem vorgegebenen Verlauf folgend reduziert wird, nach der Zeit tₓ mittelbar oder unmittelbar ein charakteristischer parameter des Werkstücks gemessen wird und anschließend in Abhängigkeit vom Wert des gemessenen Parameters die Sonotrode bei einer vorgegebenen konstanten Schwingungsamplitude über eine Zeit t_{y} Ultraschallenergie auf das Werkstück überträgt. Dabei folgt die Schwingungsamplitude in der Zeit tₓ insbesondere einem rampenförmigen Verlauf, der seinerseits in Abhängigkeit von dem zu bearbeitenden Werkstück vorgegeben wird.

Abweichend vom vorbekannten Stand der Technik wirkt auf das zu bearbeitende Werkstück die Sonotrode mit fest vorgegebenen Schwingungsamplituden, wobei zu Beginn des Bearbeitens die Amplitude vorgegebene Werte durchfährt, um sodann auf einen konstanten Wert eingestellt zu werden. Dieser Wert kann materiahnabhängig oder materialabhängig gewählt werden.

Auch erfolgt keine Erhöhung und anschließende Reduzierung der Schwingungsamplitude, um sodann auf einen konstanten Wert eingestellt zu werden. Vielmehr ist grundsätzlich vom Beginn des Verschweißens bzw. Verformens an eine kontinuierliche, jedoch nicht zwingend stetige, vielmehr auch rampenförmige Reduzierung der Schwingungsamplitude während der Zeit tₓ gegeben.

Unabhängig hiervon wird die Zeit t_{y}, innerhalb der die Sonotrode mit konstanter Amplitude auf das Werkstück einwirkt, durch Erreichen eines charakteristischen Wertes des zu bearbeitenden Werkstücks bestimmt, wobei allerdings eine maximale Zeit nicht überschritten wird. Dies bedeutet, dass nach einer vorgegebenen Zeit t_{z} der Bearbeitungsprozess beendet wird, auch dann, wenn das bearbeitete Werkstück noch nicht die zu erreichenden Eigenschaften aufweist.

In Weiterbildung der Erfindung ist vorgesehen, dass in Abhängigkeit von dem nach der Zeit tₓ gemessenen Wert des Parameters der Verlauf der Amplitude für nachfolgende Bearbeitungsprozesse überprüft und gegebenenfalls verändert wird. Hierdurch wird ein selbstlernender Prozess realisiert, der zu optimalen Bearbeitungs- wie Schweißergebnissen führt.

Die Summe der Zeiten tₓ und t_{y} ist materialabhängig unterschiedlich, überschreitet jedoch die maximale Zeit t_{z}, nicht, um z. B. bei Auftreten von Fehlern zu vermeiden, dass die Ultraschallschweißvorrichtung beschädigt wird.

Insbesondere ist vorgesehen, dass während der Zeit t_{y}, in der die Schwingungsamplitude konstant ist, der oder ein weiterer charakteristischer Parameter des zu bearbeitenden Werkstücks mittelbar oder unmittelbar gemessen wird und nach Erreichen eines vorgegebenen Wertes des Parameters die Bearbeitung beendet wird.

Als Parameter kann die Temperatur des Werkstücks und/oder Verformungsgrad des Werkstücks und/oder Stellweg der Sonotrode während des Bearbeitens und/oder Lichttransmission des Werkstücks und/oder Lichtreflexion des Werkstücks gewählt werden. Dabei kann der Verformungsgrad des Werkstückes durch einen der Sonotrode zugeordneten Wegaufnehmer bestimmt werden, so dass infolgedessen eine mittelbare Parameterbestimmung erfolgt.

Die Zeit tₓ, innerhalb der die Amplitude der Sonotrode einem vorgegebenen Verlauf folgt, kann nach in der Ultraschallschweißvorrichtung abgelegten materialspezifischen Werten des zu bearbeitenden Werkstücks vorgegeben werden. Dabei können die abgelegten Werte automatisch beim Zufuhren des Werkstücks abgerufen werden. Insbesondere ist vorgesehen, dass durch Lesen von dem Werkstück zugeordneter Codierung die abgelegten Werte abgerufen werden.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine Prinzipdarstellung einer Anordnung zum Ultraschallschweißen von Kunststoffmaterialien und
- Fig. 2: ein Amplituden-Zeit-Diagramm.

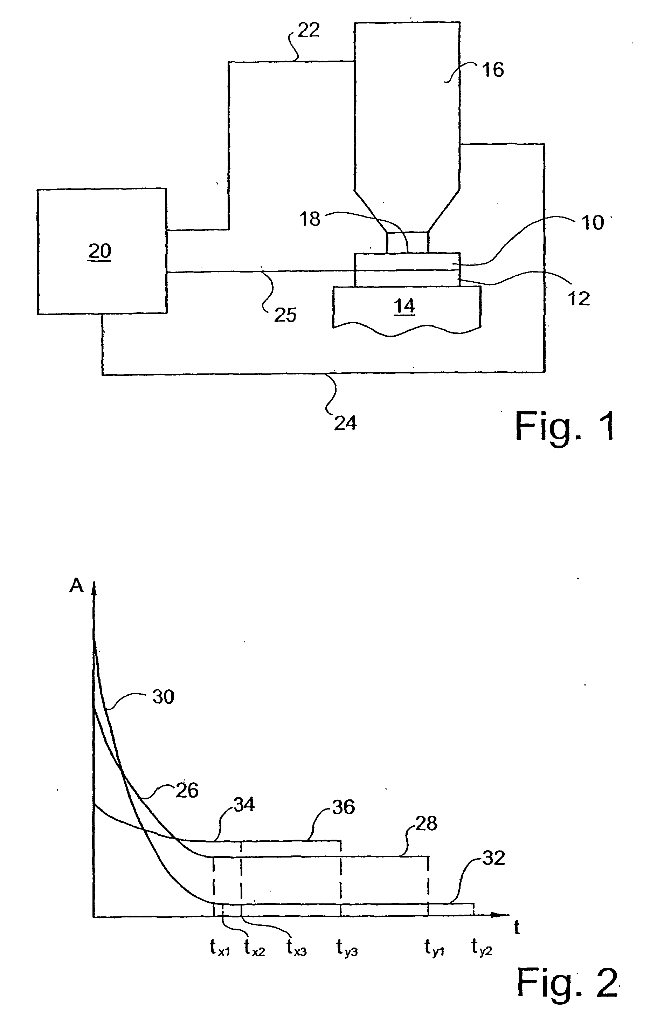

In Fig. 1 ist rein prinzipiell eine Anordnung zum Bearbeiten eines Werkstücks dargestellt. Unter Werkstück werden insbesondere ein Teil oder mehrere Teile verstanden, die aus Kunststoff bestehen oder Kunststoff enthalten und miteinander verschweißt werden sollen. Andere Applikationen z. B. das Trennen von Kunststoffteilen sind gleichfalls möglich. Als bevorzugter Anwendungsbereich des Kunststoffschweißens ist dabei der medizinische Bereich zu nennen.

Im Ausführungsbeispiel sollen zwei Kunststoffteile 10, 12, die auf einer Gegenelektrode oder einen Amboss 14 positioniert sind, mittels einer Ultraschallschweißvorrichtung verschweißt werden, und zwar über eine in Schwingung versetzte Sonotrode 16, die mit ihrem Sonotrodenkopf 18 in Kontakt mit den zu verschweißenden Teilen 10, 12, und zwar mit dem oberen Teil 14 kommt. Die Sonotrode 16 wird in gewohnter Weise über einen Konverter und gegebenenfalls einen Booster in Schwingung versetzt, ohne dass dies näher erläutert wird. Die Energiezufuhr zu dem Konverter erfolgt von einer Steuerung 20 über eine Leitung 22, über die auch die Schwingungsamplitude und Schwingungsdauer eingestellt werden.

Erfindungsgemäß ist vorgesehen, dass während einer ersten Zeit tₓ die Sonotrode 16 in ihrer Schwingungsamplitude und damit in der Energiezufuhr zu den zu verschweißenden Teilen 10, 12 verändert wird, und zwar reduziert, wobei eine kontinuierliche oder stufenförmige Amplitudenverringerung erfolgen kann. Nach der fest vorgegebenen Zeit tₓ wird eine charakteristische Größe der zu verschweißenden Teile 10, 12 wie z.B. Temperatur oder Verformungsgrad benutzt, um sodann über die Steuerung 20 die Sonotrode 16 auf eine konstante Schwingungsamplitude einzustellen. Mit dieser fest vorgegebenen Amplitude schwingt sodann die Sonotrode 16 über einen Zeitraum t_{y}, der entweder fest vorgegeben wird oder in Abhängigkeit vom Fortschritt des Verschweißens bestimmt wird. Hierzu kann erneut ein Parameter der zu verschweißenden Teile 10, 12 als Schaltgröße zur Beendigung des Ultraschallschweißens herangezogen werden.

Im Ausführungsbeispiel sind rein beispielhaft zwei Möglichkeiten zum Messen eines Parameters dargestellt. So kann über einen der Sonotrode 16 zugeordneten Wegaufnehmer ein Steuersignal über eine Leitung 24 der Steuerung 20 zugeleitet werden. Der Wegaufnehmer gibt mittelbar Aufschluss über den Verformungs- bzw. Erweichungsgrad der zu verschweißenden Teile 10, 12.

Über eine nicht dargestellte Meßsonde und eine Leitung 25 kann gleichzeitig bzw. altemativ die Temperatur der zu verschweißenden Teile 10, 12 gemessen und der Steuerung 20 zugeleitet werden, um die konstante Amplitude während der Zeit t_{y} bzw. die Zeitdauer t_{y} vorzugeben.

In Fig. 2 ist die Amplitude gegenüber der Zeit t einer Sonotrode dargestellt, über die Ultraschallenergie auf ein zu bearbeitendes wie zu verschweißendes Werkstück übertragen wird. So repräsentiert die Kurve 26 einen rampenförmigen, also einen grundsätzlich sich stetig oder stufenförmig verändernden, d. h. abnehmenden Verlauf einer Amplitudenveränderung für ein erstes Werkstück über eine fest vorgegebene Zeitdauer tₓ₁. Nach der Zeit tₓ₁ wird ein charakteristischer Parameter des bearbeiteten Werkstücks wie Temperatur, Erweichung oder Transluzenz bei zu bearbeitenden amorphen Thermoplasten gemessen.

In Abhängigkeit von dem gemessenen Wert wird sodann die Sonotrode auf eine Amplitude konstanter Größe (Gerade 28) eingestellt. Während des Einwirkens der Sonotrode mit der der Geraden 28 entsprechenden Amplitude kann in bestimmten Zeitabständen oder kontinuierlich der gleiche oder ein anderer Parameter des zu bearbeitenden Werkstücks gemessen werden, um sodann, wenn aufgrund des ermittelten Wertes des Parameters das bearbeitete Werkstück eine vorgegebene Güte erreicht hat bzw. erkennbar ist, dass ein Schweißprozeß beendet ist, den Bearbeitungsprozeß nach einer Zeit t_{y} beendet und die Sonotrode von dem Werkstück zu entfernen.

Die Kurven 30, 32 entsprechen dem Bearbeiten eines Werkstücks anderer Materialeigenschaften. Man erkennt, dass der rampenförmige Amplitudenverlauf entsprechend der Kurve 30 steiler als die Kurve 26 verläuft. Gleichzeitig ist die Zeit tₓ₂, nach der die Amplitudenänderung beendet ist, größer als die Zeit tₓ₂. Sodann wird die Amplitude auf einen Wert eingestellt, die geringer als beim vorhergehenden Beispiel ist. Der Bearbeitungsprozeß selbst ist nach einer Zeit t_{y2} beendet, die größer als die Zeit t_{y1} ist.

Ein weiterer durch die Kurven 34, 36 symbolisierter Verfahrensablauf verdeutlicht, dass die rampenförmige Verlaufsänderung der Amplitude flacher ausfällt, wohingegen der sich anschließende konstante Amplitudenwert (Kurve 34) größer als in den vorausgegangenen Beispielen bei gleichzeitiger kleinerer Zeit t_{y3} ist.

Die Amplitudenverlaufsänderungen 26, 30, 34 sind materialabhängig und werden grundsätzlich in der Ultraschallschweißvorrichtung abgelegt. Dabei kann jedoch eine selbsttätige Optimierung der vorgegebenen Kurven dadurch erfolgen, dass nach Beendigung der Bearbeitung, also nach der Zeit tₓ₁, tₓ₂, tₓ₃ erzielte Meßergebnisse mit vorgegebenen verglichen werden, um so gegebenenfalls ein Nachregeln zu ermöglichen.

Losgelöst hiervon ist die Gesamtzeit tₓ + t_{y} kleiner als eine Maximalzeit t_{z}, auch dann, wenn zum Zeitpunkt t_{z} das zu bearbeitende Material aufgrund des oder der gemessenen Parameter noch nicht die gewünschten Eigenschaften aufweist. Hierdurch wird sichergestellt, dass gegebenenfalls auftretende Fehler nicht zu einer Zerstörung der Ultraschallschweißvorrichtung bzw. Teile dieser führen können.

Anzumerken ist des Weiteren, dass die erfindungsgemäße Lehre zum Verschweißen von Kunststoffen sowohl im Nahfeld als auch im Fernfeld anwendbar ist.

Bezüglich zu verschweißender Thermoplaste wie amorphe oder teilkristalline Thermoplaste ist anzumerken, dass nur solche mit ähnlichen Erweichungsbereichen verschweißt bzw. verklebt werden sollten. Das Ultraschallschweißen eignet sich wegen seiner Polarität insbesondere für PVC, das auch als Zusatz beim Ultraschallschweißen von PMMA und ABS dient.

## Patentansprüche

1. Verfahren zum Bearbeiten wie Verschweißen oder Verformen von einem Werkstück (10, 12), insbesondere aus Kunststoffmaterial bestehend oder dieses enthaltend, wobei zum Bearbeiten des Werkstücks auf dieses eine Sonotrode (16) einer Ultraschallschweißvorrichtung mittelbar oder unmittelbar zum Übertragen von Ultraschallenergie abgestützt und in ihrer Schwingungsamplitude verändert wird,
**dadurch gekennzeichnet,**
**dass** während einer vorgegebenen Zeit tₓ die Schwingungsamplitude der Sonotrode (16) einem vorgegebenen Verlauf folgend reduziert wird, nach der Zeit tₓ mittelbar oder unmittelbar ein charakteristischer Parameter des Werkstücks (10, 12) gemessen wird und anschließend in Abhängigkeit vom Wert des gemessenen Parameters die Sonotrode bei vorgegebener konstanter oder im wesentlichen konstanter Amplitude über eine Zeit t_{y} Ultraschallenergie auf das Werkstück überträgt.

2. Verfahren nach Anspruch 1,
**dadurch gekennzeichnet,**
**dass** die Amplitude einem rampenförmigen Verlauf (26, 30, 34) folgend reduziert wird.

3. Verfahren nach zumindest einem der vorhergehenden Ansprüche,
**dadurch gekennzeichnet,**
**dass** der Verlauf der Amplitudenänderung in Abhängigkeit von dem zu bearbeitenden Werkstück (10,12) vorgegeben wird.

4. Verfahren nach zumindest einem der vorhergehenden Ansprüche,
**dadurch gekennzeichnet,**
**dass** in Abhängigkeit von dem nach der Zeit tₓ gemessenen Wert des Parameters der Amplitudenverlauf der Sonotrode für ein nachfolgend zu bearbeitendes Werkstück überprüft und gegebenenfalls verändert wird.

5. Verfahren nach zumindest einem der vorhergehenden Ansprüche,
**dadurch gekennzeichnet,**
**dass** die Zeit t_{y} variabel ist.

6. Verfahren nach zumindest einem der vorhergehenden Ansprüche,
**dadurch gekennzeichnet,**
**dass** die Zeit tₓ und die Zeit t_{y} kleiner oder gleich einem vorgegebenen Zeitintervall t_{z} ist.

7. Verfahren nach zumindest einem der vorhergehenden Ansprüche,
**dadurch gekennzeichnet,**
**dass** während der Zeit t_{y} der oder ein weiterer charakteristischer Parameter des zu bearbeitenden Werkstücks (10, 12) mittelbar oder unmittelbar gemessen wird und nach Erreichen eines vorgegebenen Wertes des Parameters die Bearbeitung beendet wird.

8. Verfahren nach zumindest einem der vorhergehenden Ansprüche,
**dadurch gekennzeichnet,**
**dass** als Parameter die Temperatur des Werkstücks (10, 12) und/oder Verformungsgrad des Werkstücks und/oder Stellweg der Sonotrode während des Bearbeitens und/oder Transmission des Werkstücks und/oder Lichtreflexion vom Werkstück gewählt wird.

9. Verfahren nach zumindest einem der vorhergehenden Ansprüche,
**dadurch gekennzeichnet,**
**dass** die Zeit tₓ und der Verlauf der sich ändernden Amplitude nach in der Ultraschallschweißvorrichtung abgelegten materialspezifischen Werten des zu bearbeitenden Werkstücks (10,12) vorgegebes werden.

10. Verfahren nach zumindest einem der vorhergehenden Ansprüche,
**dadurch gekennzeichnet,**
**dass** die abgelegten Werte automatisch beim Zuführen des Werkstücks (10, 12) zu der Ultraschallschweißvorrichtung abgerufen werden.

11. Verfahren nach zumindest einem der vorhergehenden Ansprüche,
**dadurch gekennzeichnet,**
**dass** durch Lesen von dem Werkstück (10, 12) zugeordneter Codierung die abgelegten Werte abgerufen werden.

12. Verfahren nach zumindest einem der vorhergehenden Ansprüche,
**dadurch gekennzeichnet,**
**dass** während des Verschweißens bzw. Verformens eine Vergrößerung der Schwingungsamplitude unterbleibt.

13. Verfahren nach zumindest einem der vorhergehenden Ansprüche,
dadürch gekennzeichnet,
dass von oder im Wesentlichen von Beginn des Schweißens bzw. Verformens an die Reduzierung der Schwingungsamplitude erfolgt.

14. Verfahren nach zumindest einem der vorhergehenden Ansprüche,
**dadurch gekennzeichnet,**
**dass** die Größe der Schwingungsamplitude gesteuert wird.

## Claims

1. Method for processing such as welding or shaping of a work piece (10, 12), especially consisting of plastic material or containing this, whereby for processing the work piece, a sonotrode (16) of an ultrasound welding device is indirectly or directly supported on the work piece to transmit ultrasound energy and is changed in its vibration amplitude,
**characterized in**
**that** during a specified time tₓ the vibration amplitude of the sonotrode (16) is reduced following a specified course, a characteristic parameter of the work piece (10, 12) is indirectly or directly measured after time tₓ, and subsequently the sonotrode transmits ultrasound energy to the work piece in dependence on the value of the measured parameter at a specified constant or basically constant amplitude over a time t_{y}.

2. Method according to Claim 1,
**characterized in**
**that** the amplitude is reduced following a ramp-like course (26, 30, 34).

3. Method according to at least one of the preceding claims,
**characterized in**
**that** the course of amplitude change is specified in dependence on the work piece (10, 12) to be processed.

4. Method according to at least one of the preceding claims,
**characterized in**
**that** the amplitude course of a work piece to be processed subsequently is checked and if need be altered in dependence on the value of the parameter measured after time tₓ.

5. Method according to at least one of the preceding claims,
**characterized in**
**that** time t_{y} is variable.

6. Method according to at least one of the preceding claims,
**characterized in**
**that** time tₓ and time t_{y} are smaller than or equal to a specified time interval t_{z}.

7. Method according to at least one of the preceding claims,
**characterized in**
**that** during time t_{y}, the characteristic parameter or a further characteristic parameter of the work piece (10, 12) to be processed is indirectly or directly measured, and the processing is ended after reaching a specified value of the parameter.

8. Method according to at least one of the preceding claims,
**characterized in**
**that** the temperature of the work piece (10, 12) and/or degree of deformity of the work piece and/or the travel of the sonotrode during the processing and/or transmission of the work piece and/or light reflection of the work piece is selected as a parameter.

9. Method according to at least one of the preceding claims,
**characterized in**
**that** time tₓ and the course of the changing amplitudes are specified according to material-specified values of the work piece (10, 12) to be processed stored in the ultrasound welding device.

10. Method according to at least one of the preceding claims,
**characterized in**
**that** the stored values are automatically called up when the work piece (10, 12) is fed to the ultrasound welding device.

11. Method according to at least one of the preceding claims,
**characterized in**
**that** by reading of coding allocated to the work piece (10, 12) the stored values are called up.

12. Method according to at least one of the preceding claims,
**characterized in**
**that** an enlargement of the vibration amplitude does not occur during welding or shaping.

13. Method according to at least one of the preceding claims,
**characterized in**
**that** the reduction of the vibration amplitude takes place from or essentially from the beginning of the welding or shaping on.

14. Method according to at least one of the preceding claims,
**characterized in**
**that** the magnitude of the vibration amplitude is controlled.

## Revendications

1. Procédé pour façonner par soudage ou déformation une pièce d'oeuvre (10,12), constituée en particulier de matière plastique ou en contenant, sachant que pour façonner la pièce, s'appuie sur celle-ci directement ou indirectement une sonotrode (16) d'un dispositif de soudage par ultrasons destinée à transmettre l'énergie ultrasonique, et que son amplitude d'oscillation est modifiée,
**caractérisé en ce que**
pendant un temps consigné tₓ, l'amplitude d'oscillation de la sonotrode (16) est réduite en suivant une allure consignée, qu'après le temps tₓ un paramètre caractéristique de la pièce (10, 12) est mesuré directement ou indirectement et qu'ensuite, en fonction de la valeur du paramètre mesuré, la sonotrode transmet de l'énergie ultrasonique à la pièce pendant un temps t_{y} sous une amplitude donnée constante ou pour l'essentiel constante.

2. Procédé selon la revendication 1,
**caractérisé en ce que**
l'amplitude est réduite en suivant une allure en forme de rampe (26, 30, 34).

3. Procédé selon au moins l'une des revendications précédentes,
**caractérisé en ce que**
l'allure de la modification d'amplitude est consignée en fonction de la pièce (10, 12) à façonner.

4. Procédé selon au moins l'une des revendications précédentes,
**caractérisé en ce que**,
en fonction de la valeur du paramètre mesurée après le temps tₓ, l'allure de l'amplitude de la sonotrode pour une pièce à façonner par la suite est contrôlée et modifiée le cas échéant.

5. Procédé selon au moins l'une des revendications précédentes,
**caractérisé en ce que**
le temps t_{y} est variable.

6. Procédé selon au moins l'une des revendications précédentes,
**caractérisé en ce que**
le temps tₓ et le temps t_{y} sont inférieurs ou égaux à un intervalle de temps t_{z} consigné.

7. Procédé selon au moins l'une des revendications précédentes,
**caractérisé en ce que**
pendant le temps t_{y}, le paramètre caractéristique ou un autre paramètre caractéristique de la pièces (10, 12) à façonner est mesuré directement ou indirectement, et que quand une valeur consignée du paramètre est atteinte, il est mis fin au façonnage.

8. Procédé selon au moins l'une des revendications précédentes,
**caractérisé en ce que**
comme paramètres sont sélectionnés la température de la pièce (10, 12) et/ou le degré de déformation de la pièce et/ou la course de déplacement de la sonotrode pendant le façonnage et/ou la transmission de la pièce et/ou la réflexion de la lumière de la pièce.

9. Procédé selon au moins l'une des revendications précédentes,
**caractérisé en ce que**
le temps tₓ et l'allure de modification de l'amplitude sont consignés en fonction des valeurs spécifiques au matériau de la pièce (10, 12) à façonner enregistrées dans le dispositif de soudage par ultrasons.

10. Procédé selon au moins l'une des revendications précédentes,
**caractérisé en ce que**
les valeurs enregistrées sont automatiquement appelées lors de l'introduction de la pièce (10, 12) dans le dispositif de soudage par ultrasons.

11. Procédé selon au moins l'une des revendications précédentes,
**caractérisé en ce que**
les valeurs enregistrées sont appelées par lecture du code affecté à la pièce (10,12).

12. Procédé selon au moins l'une des revendications précédentes,
**caractérisé en ce que**
pendant le soudage ou la déformation, une augmentation de l'amplitude d'oscillation n'a pas lieu.

13. Procédé selon au moins l'une des revendications précédentes,
**caractérisé en ce que**
la réduction de l'amplitude a lieu au début ou pour l'essentiel au début du soudage ou de la déformation.

14. Procédé selon au moins l'une des revendications précédentes,
**caractérisé en ce que**
la grandeur de l'amplitude d'oscillation est contrôlée.
